# NEUE EUROPÄISCHE PATENTSCHRIFT

(11) **EP 1 468 481 B2**
(45) Veröffentlichungstag und Bekanntmachung des Hinweises auf die Entscheidung über den Einspruch: **08.10.2008**
(45) Hinweis auf die Patenterteilung: 05.10.2005
(21) Anmeldenummer: 02795110.2
(22) Anmeldetag: 06.12.2002
(51) Int. Cl.: H02K 3/52, H02K 21/16

(54) **STATORANORDNUNG**
STATOR ASSEMBLY
ENSEMBLE STATOR

(30) Priorität: 22.01.2002 DE 20200873 U
(43) Veröffentlichungstag der Anmeldung: 20.10.2004
(73) Patentinhaber: ebm-papst St. Georgen GmbH & Co. KG, 78112 St. Georgen (DE)
(72) Erfinder: BURGBACHER, Martin, 78112 St. Georgen (DE)
(74) Vertreter: Raible, Hans
(86) Internationale Anmeldenummer: PCT/EP2002/013821
(87) Internationale Veröffentlichungsnummer: WO 2003/063322

(56) Entgegenhaltungen:
- EP-A1- 1 040 550
- EP-B1- 0 777 312
- DE-A- 4 122 529
- DE-A1- 19 924 325
- US-A- 4 287 446
- US-A- 5 828 147
- US-B1- 6 177 741

## Beschreibung

Die Erfindung betrifft eine Statoranordnung, insbesondere für einen elektronisch kommutierten Motor (siehe US-A-6 177 741).

Soll ein elektronisch kommutierter Motor bei einer niedrigen Betriebsspannung, z. B. der Batteriespannung eines Fahrzeugs, mit hohen Drehzahlen und gutem Wirkungsgrand betrieben werden, z. B. bei 10.000 U/min oder mehr, so müssen Widerstand und Induktivität der Wicklung sehr niedrig sein, und dies bedeutet, dass eine Wicklungsspule wenige Windungen aus einem dicken Draht haben sollte, damit die Statornuten gut mit Kupferdraht gefüllt werden können.

Werden Statoren mit sog. Nadelwickelmaschinen automatisch gewickelt, so ist es in manchen Fällen nicht möglich, die Drahtstärke einer Wicklungsspule dadurch zu reduzieren, dass man mehrere Drähte parallel wickelt.

Versucht man, das Problem dadurch zu lösen, dass man gleichartige Wicklungen parallel schaltet, so ergeben sich bei einem dreisträngigen Motor jeweils vier Drähte, die zu einem Anschluss (U, V, W) der Statorwicklung zusammengefügt werden müssen. Dadurch entsteht die Notwendigkeit für zeitaufwändige, teure Handarbeit.

Aus der DE 199 24 325 A1 ist eine Verschaltungsanordnung für einen dreisträngigen Stator mit 18 Spulen bekannt, welche in Dreieckschaltung geschaltet sind, wobei jeder der drei Stränge sechs parallel geschaltete Spulen hat. Zur Verschaltung dieser großen Zahl von Spulen sind drei voneinander isolierte flache Ringe vorgesehen, von denen jeder mit speziellen Kontaktelementen versehen ist, an welche die insgesamt 36 Spulenenden dieser 18 Spulen einzeln angeschlossen werden.

Aus der WO 99/033 157 A1 (= EP1 040 550 A1) kennt man einen dreisträngigen Motor, dessen Stator in Sternschaltung geschaltet ist. Hierzu hat der Stator einen Sternpunkt und einen entsprechenden Sternpunktleiter, an den jede Spule mit einem Spulenende angeschlossen ist.

Aus der EP 0 777 312 B1 kennt man einen dreisträngigen Stator, dessen Stränge in Dreieckschaltung geschaltet sind. Jeder Strang enthält drei parallel geschaltete Spulen, zu deren Verschaltung drei voneinander isolierte konzentrische Ringe vorgesehen sind. Die insgesamt achtzehn Spulenenden der neun Spulen sind einzeln an diese drei Ringe angeschlossen, wozu an diesen sog. Anschlussfortsätze vorgesehen sind.

Es ist deshalb eine Aufgabe der Erfindung, eine neue Statoranordnung bereit zu stellen.

Nach der Erfindung wird diese Aufgabe gelöst durch den Gegenstand des Anspruchs 1. Durch die Erfindung erreicht man, dass beim Wickeln die Verbindung zwischen benachbarten Wicklungsspulen nicht unterbrochen werden muss, sondern diese Spulen können über Drahtschleifen verbunden bleiben. Diese Drahtschleifen werden, bevorzugt während des Wickelns, an einer zugeordneten Stromschiene elektrisch leitend so befestigt, dass diese Stromschienen als Anschluss für die Zuleitung des elektrischen Stromes zur Statorwicklung dienen können. Sehr vorteilhaft ist, dass eine automatische Herstellung der Statorwicklung ermöglicht wird, weil häufig auch die elektrische Verbindung mit den Stromschienen automatisiert werden kann, und weil der Wicklungsdraht beim Wickeln nicht mehr unterbrochen werden muss, sondern bei Bedarf von der ersten Wicklungsspule bis zur letzten Wicklungsspule durchgehend gewickelt werden kann.

Die Stromschienen, und ggf. auch die Drahtschleifen zwischen den Wicklungsspulen, können z.B. an einer Stirnseite der Statoranordnung in ein oder mehrere entsprechend geformte Isolationsteile eingebracht werden, so dass eine Berührung von Drähten unterschiedlicher Wicklungsstränge und unterschiedlicher Wicklungsspulen sicher vermieden wird. Damit sind Kurzschlüsse im Bereich der Wicklung ausgeschlossen, was eine hohe elektrische Sicherheit gewährleistet, wie das z.B. auf Schiffen, Flugzeugen oder Landfahrzeugen unbedingt notwendig ist.

Durch den Gegenstand des Anspruchs 1 erhält man also in sehr einfacher Weise eine Statoranordnung, deren dreisträngige Wicklung in Dreieckschaltung geschaltet ist, wobei jeder Strang aus einer Mehrzahl von parallel geschalteten Wicklungsspulen besteht, die fortlaufend gewickelt und an ihren Enden durch Stromschienen miteinander verbunden sind, wobei diese Stromschienen auch dazu dienen können, der Statoranordnung elektrische Energie zu- oder diese von ihr abzuführen. Diese Schienen sind bevorzugt mit Lötfahnen oder dgl. versehen, die direkt in eine benachbarte Leiterplatte hineinragen und dort mit den Endstufentransistoren des elektronisch kommutierten Motors verbunden werden. Dadurch lassen sich auch bei hohen Strömen Zuleitungsverluste stark reduzieren, d.h. die Erfindung ermöglicht einen hohen Wirkungsgrad.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den Unteransprüchen. Es zeigt:
- Fig. 1: eine schematische Darstellung einer Wicklungsanordnung nach einem bevorzugten Ausführungsbeispiel der Erfindung,
- Fig. 2: einen Schnitt, gesehen längs der Linie II-II der Fig. 1,
- Fig. 3: einen vergrößerten Ausschnitt aus Fig. 2 zur besseren Darstellung des Isolators 44 mit den Kupferschienen 38 und 42, und
- Fig. 4: ein Schaltbild zur Erläuterung von Fig. 1.

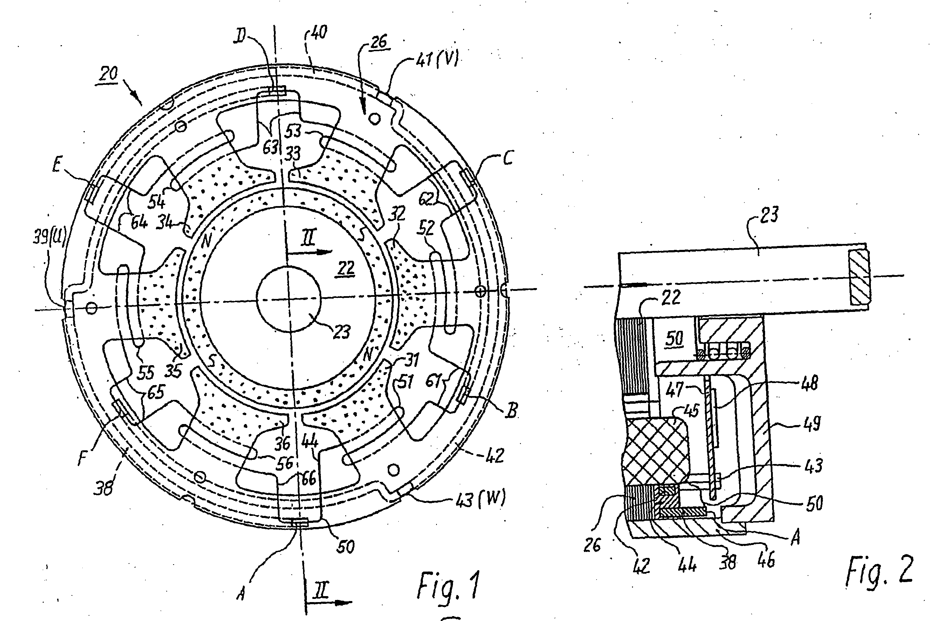

**Fig. 1** zeigt eine übliche schematisierte Darstellung einer Statoranordnung 20, hier dargestellt als Stator eines elektronisch kommutierten Innenläufermotors, dessen vierpoliger permanentmagnetischer Rotor 22 und seine Welle 23 nur schematisch angedeutet sind. Die Erfindung eignet sich z.B. in gleicher Weise für einen Linearmotor.

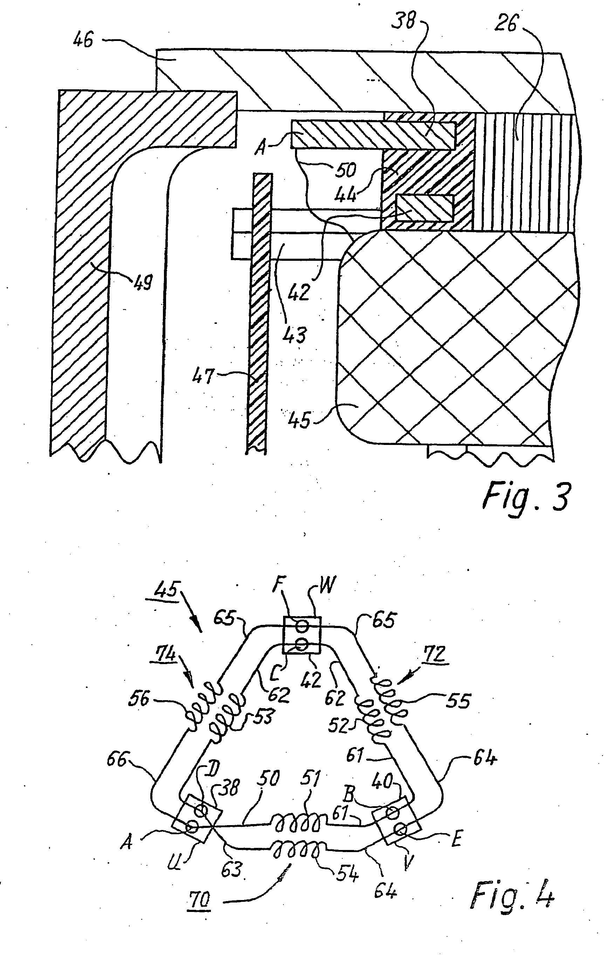

Die Statoranordnung 20 hat ein übliches Blechpaket 26, bei dem in einem Winkelbereich von 360° sechs ausgeprägte Pole 31, 32, 33, 34, 35, 36 vorgesehen sind. An einer Stirnseite der Statoranordnung 20 befinden sich eine U-Kupferschiene 38 mit einer Anschlussfahne 39, eine V-Kupferschiene 40 mit einer Anschlussfahne 41, und eine W-Kupferschiene 42 mit einer Anschlussfahne 43, welche Schienen sich jeweils über einen Winkel von etwa 180° el. erstrecken und an der Stirnseite der Statoranordnung 20 in einem isolierenden Ringteil 44 angeordnet sind, das in Fig. 2 und 3 im Schnitt dargestellt ist. Dieses ist gemäß Fig. 2 und 3 zwischen dem Wickelkopf einer schematisch angedeuteten Statorwicklung 45 und dem Gehäuse 46 des Motors angeordnet. Da sich die Kupferschienen 38, 40, 42 jeweils nur über 180° erstrecken, befinden sich an jeder Stelle des Umfangs nur zwei Kupferschienen, z.B. an der 12-Uhr-Stellung der Fig. 1 die Schienen 40 (außen) und 38 (innen). Jede Schiene verläuft über etwa 90° radial außen und über etwa 90° radial weiter innen, wie in Fig. 1 dargestellt.

Bezogen auf das Zifferblatt einer Uhr erstreckt sich die U-Kupferschiene 38 etwa von 6 bis 12 Uhr. Die V-Schiene 40 erstreckt sich von etwa 10 bis 16 Uhr. Die W-Schiene 42 erstreckt sich von etwa 2 bis 8 Uhr. Diese Kupferschienen sind durch den Isolator 44 voneinander isoliert. Ihre Anschlussfahnen 39, 41, 43 dienen zur elektrischen Verbindung mit einer Leiterplatte 47 (Fig. 2 und 3), auf der Leistungstransistoren 48 zur Steuerung der Ströme in der Statorwicklung 45 angeordnet sind. Auf diese Weise erhält man extrem kurze Zuleitungen und dadurch niedrige Verluste in diesen Zuleitungen. - Ein Lagerschild ist mit 49 bezeichnet, und bei 50 ist ein Lager für die Welle 23 angedeutet.

Auf den Statorpolen befinden sich identische Wicklungsspulen, deren - übereinstimmender - Wicklungssinn in Fig. 1 beispielhaft dargestellt ist. Auf dem ersten Statorpol 31 befindet sich eine erste Wicklungsspule 51. Man beginnt mit dem Wickeln dieser Spule, nachdem der Anfang 50 des Wicklungsdrahtes 44 an einer Stelle A (6 Uhr) an der U-Schiene 38 befestigt wurde. Die Stelle A ist in Fig. 2 und 3 im Schnitt dargestellt, und man erkennt, dass an dieser Stelle das Anschlussteil A der Kupferschiene 38 aus dem Isolator 44 heraus ragt, und dieser Teil A wird mit dem Drahtende 50 verbunden, z.B. durch Schweißen. Die nachfolgend beschriebenen Anschlüsse B bis F sind in der gleichen Weise ausgeführt.

Die Kupferschiene 42 ist an der Stelle des Anschlusses A voll vom Isolator 44 umschlossen, so dass ein Kurzschluss zwischen den Schienen 38 und 42 dort nicht möglich ist. Dies gilt analog für die anderen Schienen, d.h. diese sind zwischen den Anschlussstellen voll vom Isolator 44 umschlossen, und an den Anschlussstellen ragt immer nur der Anschluss einer Schiene aus dem Isolator 44 heraus.

Anschließend an die Spule 51 wickelt man die zweite Wicklungsspule 52 auf dem zweiten Statorpol 32, dann die dritte Wicklungsspule 53 auf dem dritten Statorpol 33, dann die vierte Wicklungsspule 54 auf dem vierten Statorpol 34, dann die fünfte Wicklungsspule 55 auf dem fünften Statorpol 35, und schließlich die sechste Wicklungsspule 56 auf dem sechsten Statorpol 36.

Dabei entsteht zwischen den Spulen 51 und 52 eine erste Drahtschleife 61, die an einer Stelle B (4 Uhr)mit der V-Schiene 40 elektrisch und mechanisch verbunden wird, bevorzugt, ohne den Wicklungsdraht 44 zu unterbrechen.

Zwischen den Spulen 52 und 53 entsteht eine zweite Drahtschleife 62, die an einer Stelle C (2 Uhr) mit der W-Schiene 42 verbunden wird.

Zwischen den Spulen 53 und 54 entsteht eine dritte Drahtschleife 63, die an einer Stelle D (12 Uhr) mit der U-Schiene 38 verbunden wird, welche also die Stellen A und D elektrisch miteinander verbindet.

Zwischen den Spulen 54 und 55 entsteht eine vierte Drahtschleife 64, die an einer Stelle E (10 Uhr) mit der V-Schiene 40 verbunden wird, welche also die Stellen B und E elektrisch miteinander verbindet.

Zwischen den Spulen 55 und 56 befindet sich eine fünfte Drahtschleife 65, die an einer Stelle F (8 Uhr) mit der W-Schiene 42 verbunden wird, welche die Stellen C und F elektrisch miteinander verbindet.

Das freie Ende der Spule 56 ist mit 66 bezeichnet und an der Stelle A mit der U-Schiene 38 und dem Wicklungsanfang 50 verbunden. Damit ist die Wicklung abgeschlossen.

**Fig. 4** zeigt, dass es sich um eine Dreieckswicklung handelt, bei der in jedem Strang zwei Wicklungsspulen parallel geschaltet sind, nämlich im Strang 70 zwischen den Anschlüssen U und V die Spulen 51 und 54, im Strang 72 zwischen den Anschlüssen V und W die Spulen 52 und 55, und im Strang 74 zwischen den Anschlüssen W und U die Spulen 53 und 56. Aus Fig. 4 geht auch klar hervor, dass die U-Schiene 38 die Anschlüsse A und D verbindet, die V-Schiene 40 die Anschlüsse B und E, und die W-Schiene 42 die Anschlüsse C und F. Auch erkennt man aus Fig. 4 die Lage der Drahtschleifen 61 bis 65, sowie des Wicklungsanfangs 50 und -endes 66.

Naturgemäß sind im Rahmen der Erfindung vielfache Abwandlungen und Modifikationen möglich. Z.B. eignet sich eine erfindungsgemäße Wicklungsanordnung in gleicher Weise für einen Außenläufermotor, oder für einen Linearmotor, wobei sich im Anschluss an sechs Statorpole die Statoranordnung beliebig oft wiederholen kann, wie das dem Fachmann des Elektromaschinenbaus geläufig ist.

## Patentansprüche

1. Statoranordnung (20) mit einer durch sechs teilbaren Zahl von ausgeprägten Statorpolen (31 bis 36), wobei in einem vorgegebenen Winkelbereich aufeinanderfolgend ein erster (31), zweiter (32), dritter (33), vierter (34), fünfter (35) und sechster Statorpol (36) angeordnet sind, und mit drei Wicklungssträngen (70, 72, 74), welche im Dreieck geschaltet sind (Fig. 4) und denen zu ihrem Anschluss drei Stromschienen (U, V, W, 38, 40, 42) zugeordnet sind, wobei eine auf dem ersten Statorpol (31) angeordnete erste Wicklungsspule (51) zwischen einer ersten Stromschiene (38) und einer zweiten Stromschiene (40), eine auf dem zweiten Statorpol (32) angeordnete zweite Wicklungsspule (52) zwischen der zweiten Stromschiene (40) und einer dritten Stromschiene (42), eine auf dem dritten Statorpol (33) angeordnete dritte Wicklungsspule (53) zwischen der dritten Stromschiene (42) und der ersten Stromschiene (38), eine auf dem vierten Statorpol (34) angeordnete vierte Wicklungsspule (54) zwischen der ersten Stromschiene (38) und der zweiten Stromschiene (40), eine auf dem fünften Statorpol (35) angeordnete fünfte Wicklungsspule (55) zwischen der zweiten Stromschiene (40) und der dritten Stromschiene (42), und eine auf dem sechsten Statorpol (36) angeordnete sechste Wicklungsspule (56) zwischen der dritten Stromschiene (42) und der ersten Stromschiene (38) angeordnet sind, wobei mindestens zwei aufeinander folgende Wicklungsspulen (51, 52) durchgehend gewickelt und an ihrer Übergangsstelle (61) mit der zugeordneten Stromschiene (40) elektrisch verbunden sind, ohne den Wicklungsdraht (44) zu unterbrechen.

2. Statoranordnung nach Anspruch 1, bei welcher die Wicklungsspulen von der ersten Wicklungsspule (51) bis zur sechsten Wicklungsspule (56) durchgehend gewickelt und an ihren Übergangsstellen (61 bis 65) jeweils mit einer zugeordneten Stromschiene elektrisch verbunden sind, ohne den Wicklungsdraht (44) zu unterbrechen.

3. Statoranordnung nach einem der vorhergehenden Anspruche, bei welcher mindestens eine Stromschiene (38, 40, 42) dazu ausgebildet ist, solche Übergangsstellen (z.B. 61 und 64) von Wicklungsspulen miteinander zu verbinden, weiche Übergangsstellen durch drei Statorpole voneinander getrennt sind.

4. Statoranordnung nach einem der vorhergehenden Ansprüche, welche drei Statorpole pro Polpaar des Rotors (22) aufweist.

5. Statoranordnung nach einem der vorhergehenden Ansprüche, bei welcher die Stromschienen (38, 40, 42) in ein Isolierteil (44) eingebettet und außerhalb ihrer Anschlussteile (A bis F, U, V, W) von diesem isolierteil (44) im wesentlichen voll umschlossen sind.

6. Statoranordnung nach Anspruch 5, bei welcher an einer Anschlussstelle (A bis F, U, V, W) das betreffende Anschlusstell (Fig. 3: A, 43) aus dem Isolierteil (44) heraus ragt.

7. Statoranordnung nach Anspruch 5 oder 6, bei welcher ein Anschlussteil (U, V, W) mit einer Leiterplatte (47) verbunden ist, welche im Bereich einer Stirnseite der Statoranordnung (20) angeordnet ist.

8. Statoranordnung nach Anspruch 7, bei welcher auf der Leiterplatte (47) mindestens ein Leistungs-Halbleiter (48) zur Steuerung der Ströme in den Strängen (70, 72, 74) der Statorwicklung (45) vorgesehen ist.

9. Elektronisch kommutierter Gleichstrommotor mit einer Statoranordnung nach einem der vorhergehenden Ansprüche, und mit einem permanentmagnetischen Rotor (22), weicher pro drei Statorpole der Statoranordnung (20) ein Rotor-Polpaar aufweist.

## Claims

1. Stator arrangement (20) with a number divisible by six of distinct stator poles (31 to 36), wherein a first (31), second (32), third (33), fourth (34), fifth (35) and sixth stator pole (36) are arranged in succession in a specified angular range, and with three winding phases (70, 72, 74), which are connected in a triangle (Fig. 4), and to which three busbars (U, V, W, 38, 40, 42) are assigned to connect them, wherein a first winding coil (51), which is arranged on the first stator pole (31), is arranged between a first busbar (38) and a second busbar (40), a second winding coil (52), which is arranged on the second stator pole (32), is arranged between the second busbar (40) and a third busbar (42), a third winding coil (53), which is arranged on the third stator pole (33), is arranged between the third busbar (42) and the first busbar (38), a fourth winding coil (54), which is arranged on the fourth stator pole (34), is arranged between the first busbar (38) and the second busbar (40), a fifth winding coil (55), which is arranged on the fifth stator pole (35), is arranged between the second busbar (40) and the third busbar (42), a sixth winding coil (56), which is arranged on the sixth stator pole (36), is arranged between the third busbar (42) and the first busbar (38), and wherein at least two successive winding coils (51, 52) are wound continuously, and at their transition point (61) are connected electrically to the assigned busbar (40), without interrupting the winding wire (44).

2. Stator arrangement according to Claim 1, wherein the winding coils from the first winding coil (51) to the sixth winding coil (56) are wound continuously, and at their transition points (61 to 65) are connected electrically to an assigned busbar in each case, without interrupting the winding wire (44).

3. Stator arrangement according to one of the preceding claims, wherein at least one busbar (38, 40, 42) is designed to connect such transition points (e.g. 61 and 64) of winding coils to each other, said transition points being separated from each other by three stator poles.

4. Stator arrangement according to one of the preceding claims, having three stator poles per pole pair of the rotor (22).

5. Stator arrangement according to one of the preceding claims, wherein the busbars (38, 40, 42) are embedded in an insulation part (44), and outside their connecting parts (A to F, U, V, W) are essentially entirely enclosed by this insulation part (44).

6. Stator arrangement according to Claim 5, wherein at a connection point (A to F, U, V, W), the appropriate connecting part (Fig. 3; A, 43) extends out of the insulation part (44).

7. Stator arrangement according to Claim 5 or 6, wherein a connecting part (U, V, W) is connected to a printed circuit board (47), which is arranged in the region of a face of the stator arrangement (20).

8. Stator arrangement according to Claim 7, wherein on the printed circuit board (47), at least one power semiconductor (48) to control the currents in the phases (70, 72, 74) of the stator winding (45) is provided.

9. Electronically commutated direct current motor with a stator arrangement according to one of the preceding claims, and with a permanently magnetic rotor (22), which has a rotor pole pair for every three stator poles of the stator arrangement (20).

## Revendications

1. Ensemble stator (20) avec un nombre divisible par six de pôles statoriques saillants (31 à 36), des premier (31), deuxième (32), troisième (33), quatrième (34), cinquième (35) et sixième (36) pôles statoriques étant disposés consécutivement dans une plage angulaire donnée, et avec trois phases d'enroulement (70, 72, 74) qui sont couplées en triangle (fig. 4) et auxquelles sont associées trois barres conductrices (U, V, W, 38, 40, 42) pour leur raccordement, une première bobine d'enroulement (51) étant disposée sur le premier pôle statorique (31) entre une première barre conductrice (38) et une deuxième barre conductrice (40), une deuxième bobine d'enroulement (52) sur le deuxième pôle statorique (32) entre la deuxième barre conductrice (40) et une troisième barre conductrice (42), une troisième bobine d'enroulement (53) sur le troisième pôle statorique (33) entre la troisième barre conductrice (42) et la première barre conductrice (38), une quatrième bobine d'enroulement (54) sur le quatrième pôle statorique (34) entre la première barre conductrice (38) et la deuxième barre conductrice (40), une cinquième bobine d'enroulement (55) sur le cinquième pôle statorique (35) entre la deuxième barre conductrice (40) et la troisième barre conductrice (42) et une sixième bobine d'enroulement (56) sur le sixième pôle statorique (36) entre la troisième barre conductrice (42) et la première barre conductrice (38), au moins deux bobines d'enroulement consécutives (51, 52) étant bobinées de manière continue et reliées électriquement à leur point de jonction (61) à la barre conductrice associée (40) sans interrompre le fil d'enroulement (44).

2. Ensemble stator selon la revendication 1, dans lequel les bobines d'enroulement de la première bobine d'enroulement (51) à la sixième bobine d'enroulement (56) sont bobinées de manière continue et chaque fois reliées électriquement à leurs points de jonction (61 à 65) à une barre conductrice associée (40) sans interrompre le fil d'enroulement (44).

3. Ensemble stator selon l'une des revendications précédentes, dans lequel au moins une barre conductrice (38, 40, 42) est conçue pour relier ensemble de tels points de jonction (p. ex. 61 et 64), lesquels points de jonction sont séparés l'un de l'autre par trois pôles statoriques.

4. Ensemble stator selon l'une des revendications précédentes, lequel présente trois pôles statoriques par paire de pôles du rotor (22).

5. Ensemble stator selon l'une des revendications précédentes, dans lequel les barres conductrices (38, 40, 42) sont noyées dans une pièce isolante (44) et, en dehors de leurs pièces de raccordement (A à F, U, V, W), sont essentiellement entièrement enrobées par cette pièce isolante (44).

6. Ensemble stator selon la revendication 5, dans lequel, à un point de raccordement (A à F, U, V, W), la pièce de raccordement concernée (fig. 3 : A, 43) dépasse de la pièce isolante (44).

7. Ensemble stator selon la revendication 5 ou 6, dans lequel un point de raccordement (U, V, W) est relié à une carte de circuits imprimés (47) qui est disposée au niveau d'une face frontale de l'ensemble stator (20).

8. Ensemble stator selon la revendication 7, dans lequel il est prévu sur la carte de circuits imprimés (47) au moins un semi-conducteur de puissance (48) pour commander les courants dans les phases (70, 72, 74) de l'enroulement statorique (45).

9. Moteur à courant continu à commutation électronique avec un ensemble stator selon l'une des revendications précédentes et avec un rotor (22) à aimant permanent qui présente une paire de pôles rotoriques par trois pôles statoriques de l'ensemble stator (20).
